# EUROPEAN PATENT APPLICATION

(11) **EP 4 557 660 A1**
(43) Date of publication of application: **21.05.2025**
(21) Application number: 24209991.9
(22) Date of filing: 30.10.2024
(51) Int. Cl.: H04L 9/08, G06F 21/62

(54) **DATA SECURITY THROUGH PARTIAL DATA DISTRIBUTION**

(30) Priority: 17.11.2023 US 202318513299
(71) Applicant: T-Mobile Innovations LLC, Bellevue, WA 98006 (US)
(72) Inventor: BALMAKHTAR, Marouane, Fairfax, 22030 (US); PACZKOWSKI, Lyle W., Mission Hills, 66208 (US)
(74) Representative: Suddaby, Mark Edward

(57) **Abstract**

In some examples, a computer program product comprises computer-executable instructions stored in a non-transitory computer readable medium. The instructions are executable by a processor to cause the processor to partition a data structure into a plurality of parts, distribute and store the plurality of parts among a plurality of data stores according to a randomization factor, generate a look-up table including an association between each of the parts and respective storage location of the parts among the plurality of data stores, responsive to a request to access the data structure, query the look-up table to determine the respective storage locations of the parts among the plurality of data stores, access the respective storage locations to obtain the parts, and reassemble the parts to obtain the data structure.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Data encryption generally operates on the premise that while all encryption is ultimately breakable or decryptable given sufficient time and computing/processing power, via conventional computing means the average amount of time consumed in breaking the encryption renders the encryption relatively secure. As technology advances, opportunities emerge for new approaches to data security.

### SUMMARY

In some examples, a communication system includes first, second, and third data stores, a server communicatively coupled to the first, second, and third data stores, and an application stored on the server. The application is executable to horizontally partition a data structure into a plurality of shards including a first shard identified by a first shard identifier (ID) and a second shard identified by a second shard ID. The application is further executable to determine a first randomization factor for the first shard and a second randomization factor for the second shard. The application is further executable to store the first shard in the first data store based on a value of the first randomization factor and store the second shard in the second data store based on a value of the second randomization factor. The application is further executable to generate a look-up table including, for the first shard, the first shard ID and an indication of the first data store, and for the second shard, the second shard ID and an indication of the second data store. The application is further executable to store the look-up table in the third data store.

In some examples, a computer program product comprises computer-executable instructions stored in a non-transitory computer readable medium. The instructions are executable by a processor to cause the processor to partition a data structure into a plurality of parts, distribute and store the plurality of parts among a plurality of data stores according to a randomization factor, generate a look-up table including an association between each of the parts and respective storage location of the parts among the plurality of data stores, responsive to a request to access the data structure, query the look-up table to determine the respective storage locations of the parts among the plurality of data stores, access the respective storage locations to obtain the parts, and reassemble the parts to obtain the data structure.

In some examples, a method for performing data security through partial data distribution, includes horizontally partitioning a data structure into a plurality of shards, each shard identified by a shard ID, determining a randomization factor for each shard of the plurality of shards, storing each of the shards in a respective data store of a group of data stores based on the randomization factors, and generating a look-up table including the shard IDs, an order of the shards in the data structure, and a data store of the group of data stores in which each respective shard of the plurality of shards is stored.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an example of the disclosure.
FIG. 2 is a flowchart of a method for data security through partial data distribution according to an example of the disclosure.
FIG. 3 is a flowchart of a method for data security through partial data distribution according to an example of the disclosure.
FIG. 4 is a diagram of a network according to an example of the disclosure.
FIG. 5 is a block diagram of a computer system according to an example of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

Examples of this disclosure provide for data security through partial data distribution. For example, the data may be split into multiple portions and distributed, thus increasing the difficulty for a malefactor to obtain a whole of the data. As described above, data encryption generally operates on the premise that while all encryption is ultimately breakable or decryptable given sufficient time and computing/processing power, via conventional computing means the average amount of time consumed in breaking the encryption renders the encryption relatively secure. For example, if an encryption takes approximately 100 years to break, the subject data of that encryption is likely no longer evergreen and the breaking of the encryption does no effective harm. For various sensitivities of data, layered encryption or other encryption formats may be used that lengthen or shorten the average amount of time consumed in breaking the encryption. However, quantum computing may be a disrupting force in the area of data protection, and more particularly data encryption and decryption. For example, encryption that may have taken approximately 100 years to decrypt using then existing state of the art, yet conventional, computing techniques may be reduced to weeks, days, or even hours through the use of quantum computing. Thus, techniques that enhance the security of data in the face of quantum computing's increased ability to perform decryption may be useful.

Often, data security may be considered an onion-like effort that is multi-layered. A malefactor attempting to gain unauthorized access to secure data may first have to gain access to a network having access to a data store in which the secure data is stored. Next, the malefactor must identify a location of the secure data that is of interest to the malefactor and gain access to the data store that is storing the secure data. Finally, the malefactor must obtain and decrypt the secure data. Each of these operations includes various time-consuming actions, such as determining, via hacking, social engineering, or any other means, access credentials for the network and possibly separately for the data store, and breaking the encryption of the secure data to perform the decryption. By making it more difficult for a malefactor to find the secure data once the malefactor has gained access to the network, or by increasing a number of data stores to which the malefactor must gain access to obtain an entirety of the secure data, an amount of time for obtaining and decrypting the secure data may be increased, increasing relative security of the secure data.

Sharding is a technique in which a horizontal partitioning is performed to split a data structure (such as a table, database, file, dataset, or the like) into multiple pieces. For example, to implement the sharding, an application, processing element, or other device shards the data structure to form multiple separate shards, each containing a part of the data structure. In some examples, sharding may segment a network into multiple shards that each has a capability to independently process transactions. The shards may be substantially the same size or varying in size. In some examples, the data structure is encrypted prior to sharding the data structure. In some examples, the individual shards are encrypted again after the sharding, adding a second layer of encryption and further complicating a malefactor's access to data included in the shard. In some examples, the data structure itself is not encrypted, and in such examples the individual shards are encrypted after the sharding.

After splitting the data structure into shards, the shards may be stored in various locations. However, by increasing a number of the locations, and a randomness of the locations, relative security of the data structure may be increased. If the data structure is encrypted prior to formation of the shards, all shards may need to be reassembled, in the correct order, to enable decryption and gaining of usable data from the data structure. Thus, if a malefactor cannot find one or more shards, the malefactor may be unable to glean meaningful or useful data from a remainder of the shards of the data structure, may be unable to accurately decrypt the data structure, or the like. Thus, the shards may be distributed to multiple data stores. In some examples, at least some of the data stores may be first-party data stores (e.g., data stores maintained and/or controlled by a party to which the data structure belongs, or to whom care of the data structure is entrusted). In some examples, at least some of the data stores may be second-party data stores or third-party data stores, such that the data stores are outside a network and/or outside maintenance or control of the first-party.

Patterns or predictability in the distribution of the shards may adversely affect the gains in security resulting from distributing the shards among multiple data stores. For example, the existence of a pattern or predictability in the distribution may enable a malefactor to determine data stores which may store shards of a given data structure, determine an order for reassembling the shards, or the like. To mitigate the odds of such a pattern or predictability existing, shard distribution may be randomized. In some examples, the randomization may be based on a quantum value, such as a quantum number, assigned to each shard. The quantum value may be determined via quantum processing. For example, a quantum bit, once initialized and placed into superposition, has equal chances at a given point in time of having a value of logical 1 or logical 0. By measuring a state of the quantum bit, its value at that instant in time, whether logical 1 or logical zero, can be determined. By performing such a measurement a number of times and concatenating the resulting logical values as bits of a digital code, the quantum value may be determined having a randomness determined based on the quantum bit. Based on the quantum value assigned to a shard, a data store for storing the shard may be selected. In some examples, a pool of available data stores exists for storing shards, and a subset of that pool of available shards is selected for storing shards of a particular data structure based on the assigned quantum values. In some examples, each data store may store only one shard of a given data structure. In other examples, a single data store may store more than one shard of a given data structure, and those shards may include consecutive or non-consecutive data of the data structure. For example, if a data structure is split into N shards, a single data store may include one shard (e.g., shard[X]) or may include multiple shards (e.g., shard[X] and shard[Y], X∈[0:N]; X≠Y). By distributing shards in a random order and to a random selection of available data stores, relative security of the data structure may be further increased by increasing the difficulty experienced by a malefactor in locating shards, determining how to reassemble those shards into a proper order for forming the data structure, and breaking any encryption performed along the way.

To enable reconstruction of the data structure from the randomly distributed shards, a look-up table may be created. The look-up table may be dynamic, such that the look-up table is updated as a shard or shards are created, destroyed, moved, or the like. Each shard of a data structure may be associated with a shard identifier to uniquely identify each of the shards. The look-up table may indicate a location of each shard and a proper order for reassembling the shards to form the data structure. The look-up table may therefore be an attractive attack vector for the malefactor, as the look-up table may enable the malefactor to at least partially circumvent the data security enhancements described above. To mitigate the possibility of the malefactor gaining access to the look-up table, the look-up table may be stored in a first-party data store, as described above. In some examples, the look-up table itself may be encrypted and/or sharded, further enhancing security of the data structure. In some examples, the look-up table may be implemented as a distributed ledger, such as a blockchain, to provide linearity and a degree of trust in accuracy of the contents of the look-up table. In some examples, the look-up table is protected by a smart contract implemented in the distributed ledger.

As described above, accurate reconstruction and therefore recovery of the data structure may be dependent on the shards being ordered properly. If the shards are ordered incorrectly, shards are missing, or data other than the shards is included, the data structure may be unrecoverable. In some examples, to further increase relative security of the data structure, a spike may be inserted. A spike, as used herein, refers to red herring or false data that may simulate or emulate a genuine shard and may be included in the look-up table in the same manner as a shard. In some examples, the spike may be distributed with the shards of the data structure as if the spike was another shard of the data structure. In this way, a malefactor obtaining all shards of the data structure and the spike may still be unable to successfully reconstruct the data structure because of the presence of the spike. For example, the presence of the spike with the shards will result in a decryption or breaking of encryption failing to produce the same data as would be produced in the absence of the spike. In some examples, multiple spikes may exist for a single data structure. A spike may include random data, or may include useful data. For example, a spike may include data that may be useful in indicating where the spike has been placed within the order of shards of the data structure.

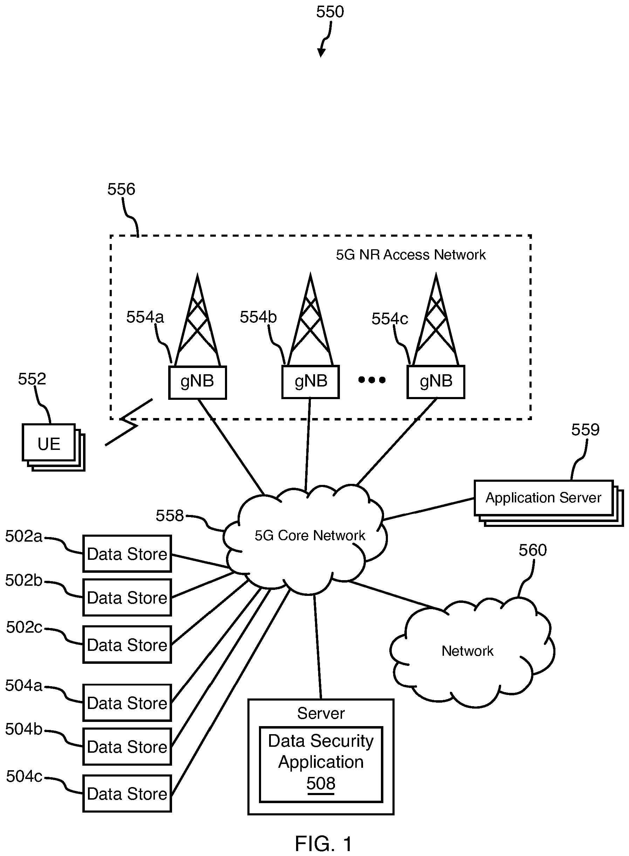

Turning now to FIG. 1, a communication system 550 in accordance with various examples is described. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a next Generation Node B (gNB). In 4G technology (e.g., long-term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long-Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (loT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

In an example, one or more data stores 502 are communicatively coupled to the core network 558. For example, a first data store 502a, a second data store 502b, and a third data store 502c. It is understood that the system 550 may include any number of data stores 502. The data stores 502 may be second-party data stores or third-party data stores, as described above, that are outside of the control of an owner or operator of the core network 558. In an example the system 550 also includes one or more data stores 504 are communicatively coupled to the core network 558. For example, a first data store 504a, a second data store 504b, and a third data store 504c. It is understood that the system 550 may include any number of data stores 504. The data stores 504 may be first-party data stores, as described above, that are within the control of the owner or operator of the core network 558.

In an example, a server 506 is communicatively coupled to the core network 558. The server 506 includes a non-transitory memory (not shown) including executable instructions, executable by one or more processors (not shown) for implementing a distributed data security application 508.

In an example, the distributed data security application 508 shards a data structure and distributes the shards to one or more of the data stores 502 and/or data stores 504. By distributing the shards to multiple data stores, the distributed data security application 508 increases the difficulty for a malefactor to identify and obtain the shards to reconstruct the data structure. For example, responsive to a triggering event, the distributed data security application 508 horizontally partitions the data structure to form two or more shards, where the data structure may be reconstructed or reformed from the shards. The triggering event may be receiving an instruction from a user, such as to perform distributed security, or may be automatically generated based on other actions. For example, the triggering event may be automatically generated based on changes to the data structure being committed or saved, the data structure being encrypted, a particular time of day occurring, day of the week occurring, or other temporal event occurring. In some examples, the data structure represents at least a portion of a network slice, or virtual network slice, in the core network 558. For example, the slice may be represented as one or more databases or other data structures that includes network parameters of the slice, and the distributed data security application 508 shards the data of the slice.

Each of the shards may include a shard ID or other uniquely identifying information. Responsive to sharding the data structure, the distributed data security application 508 creates, or updates, a look-up table with the shard ID. In an example, the look-up table is stored in a data store 504, providing greater security and control by the operator of the core network 558 than would be available at a data store 502. In some examples, the look-up table is a hashed data base providing a degree of security. In other examples, the look-up table is a distributed database, such as a hyperledger or other form of blockchain-based distributed ledger(s). The distributed data security application 508 further determines a randomization for distributing the shards across at least some of the data stores 502 and/or the data stores 504. For example, the distributed data security application 508 may randomly assign each shard of the shards of the data structure to a data store of the data stores 502 and/or data stores 504, where each data store 502 and data store 504 may have a number of shards short of a full number of the shards, or may have no shards of the data structure. The distributed data security application 508 determines the randomization according to any suitable process, the scope of which is not limited herein. In some examples, the distributed data security application 508 implements, or queries, a random number generator to determine the randomization. In some examples, a random number received by the distributed data security application 508 from the random number generator may be normalized or otherwise processed to equate the random number to a range (e.g., a range representing a number of the shards, a range representing a number of available data stores 502, 504, etc.).

In some examples, the distributed data security application 508 queries or otherwise interrogates another computing device (not shown) to determine the randomization. In some examples, the distributed data security application 508 determines the randomization based on querying a quantum computing device (not shown). For example, quantum computing may be particularly well-suited for providing random numbers, or numbers having a quantum randomness.

In an example, the distributed data security application 508 associates each of the shards to a data store of the data store 502, 504 based on the random numbers. The distributed data security application 508 may then transmit a shard to its respectively assigned data store for storage. In an example, for each shard, the distributed data security application 508 updates the look-up table with an identity of a data store at which the shard is stored. In this way, the look-up table includes a mapping of locations of each shard and a proper order for reassembling the shards.

In some examples, the distributed data security application 508 generates fake shards. The fake shards may be referred to as spikes. The spikes include red herring, or noise, data that, if included in a reconstruction of the data structure, may render the data structure, or at least a portion of the data structure, unreadable. In some examples, the distributed data security application 508 determines random locations for inserting the spikes into an order of shards of the data structure, and/or a location for storing the spikes, based on quantum randomness, as described above. In some examples, data of the spike itself may be useful in identifying that the spike is not genuine data of the data structure. In other examples, spike data may be placed into an individual shard (or multiple shards), rather than a spike simulating an additional shard. The distributed data security application 508 may store information of the spike in the look-up table as if the spike represented genuine data of the data structure. In some examples, the distributed data security application 508 also stores an indication in the look-up table that the spike is not genuine data of the data structure, such as to identify the spike for removal during reconstruction of the data structure from the shards.

As described above, multiple levels of encryption may be implemented to secure the data structure. For example, the data structure may be encrypted, each shard may be encrypted, the look-up table may be encrypted, and the like. In some examples, the look-up table, or another distributed ledger referenced by the look-up table, may include information for decrypting one or more of the shards and/or the data structure. For example, the look-up table may include one or more encryption keys associated with shards and/or the data structure, an identification of a particular encryption key not stored in the look-up table, or any other information that may be useful in decrypting the shards and/or the data structure or reconstructing the data structure in a readable format from the shards.

In some examples, the distributed data security application 508 distributes, stores, and accesses shards according to an InterPlanetary File System (IPFS) scheme. In some examples, the IPFS scheme may be modified or augmented to further increase relative security of the data structure. For example, IPFS eschews traditional hierarchical file paths for a content-based addressing. For example, IPFS forms content identifiers for files or other content based on a cryptographic hash of the content. Thus, anyone with access to the content identifier of content stored under an IPFS scheme may access that content. To increase the relative security of the data structure, the IPFS scheme may be modified or augmented to add an access control mechanism on top of the IPFS scheme. For example, before storage in at least some of the data stores 502, 504, the distributed data security application 508 may encrypt the shards. The encryption of the shards may both secure the data of the shards themselves, as well as access to the shards. For example, the IPFS scheme may be modified such that only users having the encryption key for a shard may access the shard within the IPFS system. Thus, by controlling distribution of the encryption information used to encrypt the shards, access to the shards within the IPFS scheme may be restricted.

In at least some examples, the distributed data security application 508 increases security of the data structure by dividing the data structure into multiple shards and randomly distributing the shards among the data stores 502, 504. In this way, a degree of difficulty, and therefore an amount of time consumed, for a malefactor to obtain the shards of a data structure and accurately assemble the shards is increased, increasing relative security of the data structure.

Responsive to an attempt to access the data structure, the distributed data security application 508 reconstructs and decrypts the data structure. For example, responsive to receiving a request to access the data structure, the distributed data security application 508 accesses the look-up table. Based on the look-up table, the distributed data security application 508 identifies shards associated with the data structure. In some examples, the look-up table includes information for multiple data structures, such as the locations and shard IDs for shards of the multiple data structures. The distributed data security application 508 determines a location of the shards associated with the data structure, and an order for assembling the shards, from the look-up table. The distributed data security application 508 may obtain the shards and assemble the shards in an order indicated by the look-up table. In some examples, assembling the shards includes removing or otherwise omitting spikes identified in the look-up table, as described above herein. In an example in which the shards are encrypted, the distributed data security application 508 decrypts the shards. In some examples, the decryption is based on cryptographic information, such as encryption or decryption keys, included in, or referenced by, the look-up table.

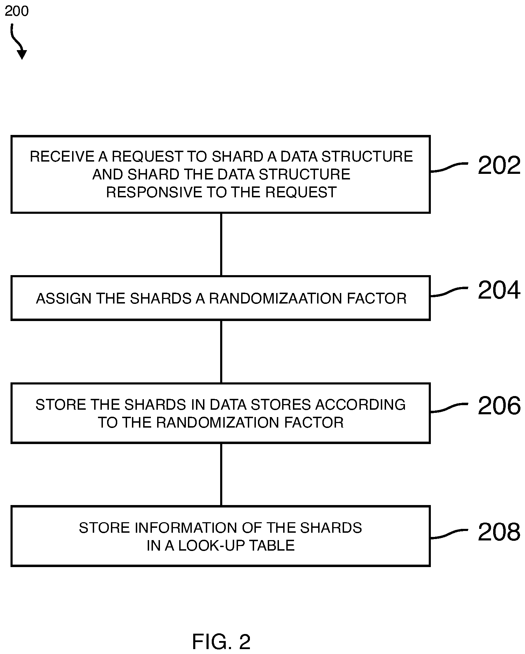

FIG. 2 is a flowchart of a method 200 for data security through partial data distribution, in accordance with various examples. In some examples, the method 200 is implemented to divide a data structure into multiple parts and distribute those parts randomly among at least some data stores of a group of available data stores. The method 200 may be a computer-implemented method, such as implemented by a server or other computing device. In an example, the method 200 is implemented as a series of computer-executable instructions which may be stored in a non-transitory storage medium and be executed by a processor. Responsive to execution, the instructions may cause the processor and/or other components of the computing device to be configured or programmed in a particular state, or control the processor or other components to perform one or more actions. In some examples, the method 200 is implemented by the distributed data security application 508, as described above herein.

At operation 202, a request is received to shard a data structure and the data structure is sharded. In some examples, the request is received from a user. In other examples, the request is automatically generated based on a triggering event, such as modification of the data structure, saving or committing changes of the data structure, encryption of the data structure, creation of the data structure, or the occurrence of a temporal trigger, such as time of day, day of week, day or week of month, etc. In some examples, the data structure is sharded by performing a horizontal partitioning of data, or according to any other shard-forming technique, the scope of which is not limited herein. The data structure may be sharded into any suitable whole number of shards greater than 1. In some examples, a greater number of shards may correspond to a greater relative security of the data structure, such as requiring a malefactor to identify and obtain a greater number of shards before attempting to reconstruct the data structure.

At operation 204, the shards are assigned a randomization factor. The randomization factor may be any parameter that applies a randomness to the shards. In some examples, the randomization factor is based on, or is, a random number. The random number may be normalized or otherwise processed to cause the random number to be within a range suitable for use with the shards, such as based on a number of the shards, a number of data stores available for storing the shards, or the like. The randomization factor may be generated according to any suitable process. In some examples, the randomization factor is generated via quantum processing, such that the randomization factor has a quantum randomness.

At operation 206, the shards are stored in data stores according to the randomization factor. For example, respective shards are stored in data stores having values corresponding to the randomization factor assigned to each respective shard. The data stores may be any of first-party, second-party, or third-party data stores, as described above, the scope of which is not limited herein. In some examples, the shards are encrypted prior to storage. Further, in some examples, the shards may be stored according to a modified IPFS scheme, as described above, in which a cryptographic key of a shard serves as access control for accessing the shard in the modified IPFS scheme.

At operation 208, information of the shards is stored in a look-up table. For example, any one or more of a shard ID, a location of the shard in the data structure, a location (e.g., data store) at which the shard is stored, cryptographic information of the shard, or the like is stored in the look-up table. In this way, the look-up table may serve as a map for locating, obtaining, and reassembling the shards to form the data structure. In some examples, the look-up table is hashed, encrypted, or otherwise secured. The look-up table may be stored in a first-party data store, as described above, to provide an increased degree of security to the look-up table. In some examples, the look-up table is implemented as a hyperledger or other form of blockchain-based distributed ledger, which may be secured by a smart contract.

Although not shown in FIG. 2, in some examples, a spike is generated. The spike may be false data similar to a shard and serves as a red herring for a malefactor, as described above herein. The spike may be recorded in the look-up table and stored to a data store in the same manner as a shard. In some examples, the look-up table further includes an indication of the spike to enable omission of the spike from the reconstructed data structure.

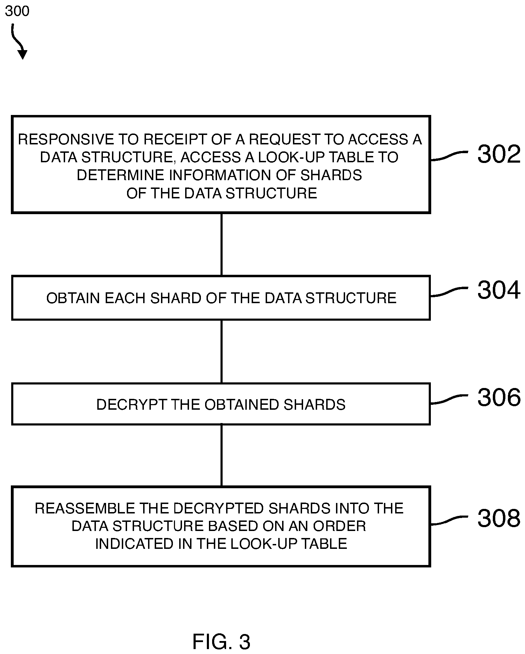

FIG. 3 is a flowchart of a method 300 for data security through partial data distribution, in accordance with various examples. In some examples, the method 300 is implemented to reconstruct a data structure from multiple parts distributed among at least some data stores of a group of available data stores. The method 300 may be a computer-implemented method, such as implemented by a server or other computing device. In an example, the method 300 is implemented as a series of computer-executable instructions which may be stored in a non-transitory storage medium and be executed by a processor. Responsive to execution, the instructions may cause the processor and/or other components of the computing device to be configured or programmed in a particular state, or control the processor or other components to perform one or more actions. In some examples, the method 300 is implemented by the distributed data security application 508, as described above herein.

At operation 302, responsive to receipt of a request to access the data structure, the look-up table is accessed to determine information of shards of the data structure. In some examples, accessing the look-up table includes reassembling the look-up table from multiple distributed storage locations, decrypting the look-up table, or any other suitable action. The information of the shards may include a shard ID, a location (e.g., data store) at which the shard is stored, cryptographic information of the shard (which may also be access control information for accessing the storage location of the shard), an order of the shard for in the data structure for reassembling the data structure, or the like.

At operation 304, each shard of the data structure is obtained. In some examples, access to the shards is protected via a modified IPFS scheme, as described above, which includes access control. In some examples, the access control is cryptographic based such that access to a shard is restricted to parties having an encryption key, decryption key, or other cryptographic key of the shard.

At operation 306, the obtained shards are decrypted. In some examples, the decryption is performed based on cryptographic information included in the look-up table, such as an encryption or decryption key associated with the shard, or a reference in the look-up table between the shard and an encryption or decryption key not stored in the look-up table.

At operation 308, the decrypted shards are reassembled into the data structure based on an order indicated in the look-up table. In some examples, reassembling the shards includes omitting and data indicated in the look-up table as a spike, as described above herein. In some examples, the data structure as formed by the reassembled shards is encrypted. In such examples, the encrypted data structure is decrypted to obtain the data structure in a readable format.

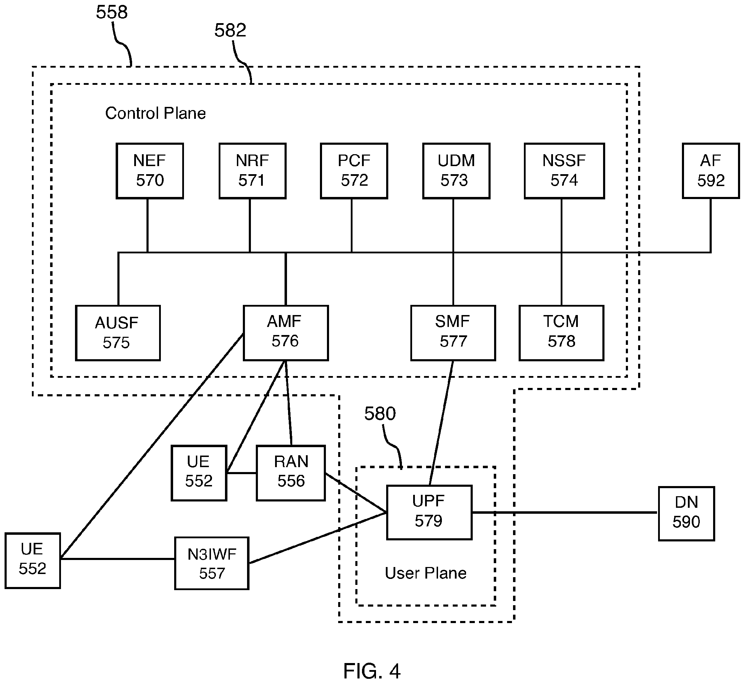

Turning now to FIG. 4, further details of the core network 558 are described. In an embodiment, the core network 558 is a 5G core network. 5G core network technology is based on a service-based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 1). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow-based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be execute on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

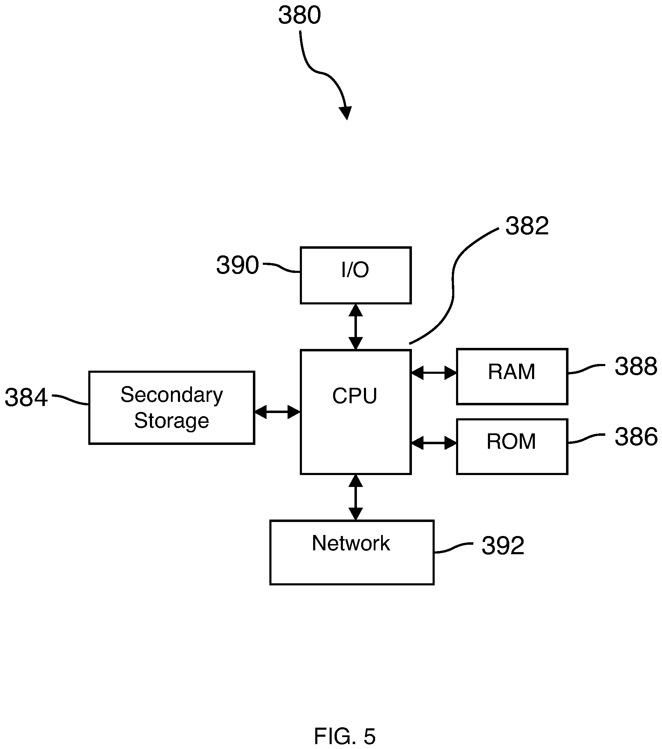

FIG. 5 illustrates a computer system 380 suitable for implementing one or more embodiments disclosed herein. The computer system 380 includes a CPU 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The CPU 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC), radio frequency identity (RFID). The radio transceiver cards may promote radio communications using 5G, 5G New Radio, or 5G LTE radio communication protocols. These network connectivity devices 392 may enable the CPU 382 to communicate with the Internet or one or more intranets. With such a network connection, it is contemplated that the CPU 382 might receive information from the network, or might output information to the network in the course of performing the above-described method steps. Such information, which is often represented as a sequence of instructions to be executed using CPU 382, may be received from and outputted to the network, for example, in the form of a computer data signal embodied in a carrier wave.

Such information, which may include data or instructions to be executed using CPU 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The CPU 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one CPU 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The CPU 382 may process the executable instructions and/or data structures in part by directly accessing the computer program product, for example by reading from a CD-ROM disk inserted into a disk drive peripheral of the computer system 380. Alternatively, the CPU 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the CPU 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the present disclosure.

## Claims

1. A communication system, comprising:
first, second, and third data stores;
a server communicatively coupled to the first, second, and third data stores; and
an application stored on the server, the application executable to:
horizontally partition a data structure into a plurality of shards including a first shard identified by a first shard identifier, ID, and a second shard identified by a second shard ID;
determine a first randomization factor for the first shard and a second randomization factor for the second shard;
store the first shard in the first data store based on a value of the first randomization factor and store the second shard in the second data store based on a value of the second randomization factor;
generate a look-up table including:
for the first shard, the first shard ID and an indication of the first data store; and
for the second shard, the second shard ID and an indication of the second data store; and
store the look-up table in the third data store.

2. The system of claim 1, wherein the application is further executable to:
encrypt the first shard according to first encryption and the second shard according to second encryption;
generate the look-up table including:
for the first shard, cryptographic information of the first encryption; and
for the second shard, cryptographic information of the second encryption.

3. The system of claim 1, wherein the application is further executable to encrypt the look-up table.

4. The system of claim 1, wherein the third data store is under control of an operator of the communication system, and wherein the first and second data stores are third-party data stores not under control of the operator of the communication system.

5. The system of claim 1, wherein the application is further executable to:
access the look-up table to determine information of the first shard and the second shard including, for the first shard, the first shard ID, the indication of the first data store, and for the second shard, the second shard ID and the indication of the second data store;
access the first data store based on the information of the first shard to obtain the first shard;
access the second data store based on the information of the second shard to obtain the second shard; and
reconstruct the data structure from the first shard and the second shard;
wherein the information of the first shard and the second shard includes first cryptographic information corresponding to encryption of the first shard and second cryptographic information corresponding to encryption of the second shard, and wherein accessing the first data store based on the information of the first shard includes authenticating into a file system of the first data store using the first cryptographic information, and wherein accessing the second data store based on the information of the second shard includes authenticating into a file system of the second data store using the second cryptographic information.

6. A computer program product comprising computer-executable instructions stored in a non-transitory computer readable medium the instructions executable by a processor to cause the processor to:
partition a data structure into a plurality of parts;
distribute and store the plurality of parts among a plurality of data stores according to a randomization factor;
generate a look-up table including an association between each of the parts and respective storage location of the parts among the plurality of data stores;
responsive to a request to access the data structure, query the look-up table to determine the respective storage locations of the parts among the plurality of data stores;
access the respective storage locations to obtain the parts; and
reassemble the parts to obtain the data structure.

7. The computer program product of claim 6, wherein the randomization factor is a random number generated by a quantum computing system and having a quantum randomness.

8. The computer program product of claim 6, wherein the parts are encrypted, and wherein accessing the respective storage locations to obtain the parts includes authenticating into a storage location of the respective storage locations with cryptographic information of a part of the parts that is stored in the storage location.

9. The computer program product of claim 6, wherein reassembling the parts to obtain the data structure includes decrypting the parts and placing the parts in an order indicated in the look-up table, and wherein:
reassembling the parts includes omitting at least one part indicated in the look-up table as red herring data; or
the data structure is encrypted, and wherein reassembling the parts to obtain the data structure includes decrypting the data structure after placing the parts in the order indicated in the look-up table.

10. A method for performing data security through partial data distribution, comprising:
horizontally partitioning a data structure into a plurality of shards, each shard identified by a shard identifier, ID;
determining a randomization factor for each shard of the plurality of shards;
storing each of the shards in a respective data store of a group of data stores based on the randomization factors; and
generating a look-up table including the shard IDs, an order of the shards in the data structure, and a data store of the group of data stores in which each respective shard of the plurality of shards is stored.

11. The method of claim 10, wherein determining the randomization factor comprises querying a quantum computing system to determine the randomization factor as a number having a quantum randomness.

12. The method of claim 10, further comprising encrypting the data structure prior to horizontally partitioning the data structure.

13. The method of claim 10, further comprising encrypting each shard of the plurality of shards prior to storing the shards in the data stores.

14. The method of claim 13, where the look-up table includes cryptographic information for each shard of the plurality of shards corresponding to the encryption of shards, and where storing each of the shards is performed according to an InterPlanetary File System, IPFS, scheme with access control based on the cryptographic information.

15. The method of claim 10, wherein the look-up table is a blockchain-based distributed ledger.
